# FASCICULE DE BREVET EUROPEEN

(11) **EP 2 450 868 B1**
(45) Date de publication et mention de la délivrance du brevet: **11.10.2017**
(21) Numéro de dépôt: 11187875.7
(22) Date de dépôt: 04.11.2011
(51) Int. Cl.: G08G 5/00, G01C 23/00, G01S 13/94

(54) **Procédé et dispositif de détection de collisions potentielles pouvant être mis en oeuvre dans un aéronef**
Verfahren und Vorrichtung zur Erfassung einer möglichen Kollision die in einem Flugzeug implementiert werden.
Method and device for detecting possible collisions to be implemented in an aircraft

(30) Priorité: 05.11.2010 FR 1059134
(43) Date de publication de la demande: 09.05.2012
(73) Titulaire: Rockwell-Collins France, 31700 Blagnac (FR)
(72) Inventeur: Oberti, Michaël, 31200 TOULOUSE (FR); Bitar, Elias, 31170 TOURNEFEUILLE (FR); Neu-Faber, Jean-François, 31700 BLAGNAC (FR)
(74) Mandataire: Delumeau, François Guy

(56) Documents cités:
- WO-A1-01/11383
- FR-A1- 2 868 835
- FR-A1- 2 898 425
- FR-A1- 2 932 279
- US-A- 4 760 396
- US-A- 5 638 282
- US-B1- 6 885 334

## Description

### Arrière-plan de l'invention

L'invention se situe dans le domaine de la détection d'obstacles à partir d'un aéronef.

La part croissante des accidents dits CFIT (acronyme de l'expression anglo-saxonne : "Controlled Flight Into Terrain") depuis une vingtaine d'année dans l'aviation tant civile que militaire, a conduit à développer des systèmes pour prévenir l'équipage d'un aéronef d'un risque de collision avec le sol.

Cette tendance s'est accentuée ces dix dernières années avec l'obligation d'emport dans les aéronefs civils de plus de quinze personnes de systèmes TAWS (acronyme de l'expression anglo-saxonne : "Terrain Awareness and Warning System").

Ces systèmes TAWS font une prévision de la trace au sol de l'aéronef à partir des calculateurs de vol, la projette sur une carte d'élévation terrain issue d'une base de données embarquée et émettent des alarmes sonores et visuelles de risques de collision avec le sol à chaque fois que la trajectoire prévue entre en collision avec la carte d'élévation.

Dans le système TAWS, la marge utilisée pour déterminée si un aéronef risque d'entrer en collision avec un obstacle est une marge fixe. Elle est choisie pour protéger les aéronefs évoluant à haute vitesse. Par conséquent, lorsqu'un aéronef évolue à basse vitesse, les systèmes TAWS génèrent de nombreuses fausses alarmes.

Par ailleurs, les systèmes TAWS se basant sur une base de données d'élévation ne peuvent pas prémunir l'aéronef de risques de collision avec des obstacles l'environnement réel tels que par exemple des câbles, pylônes, ou des grues. En effet, ces obstacles ne peuvent pas être répertoriés de façon exhaustive dans une base de données partagée et mise à jour mondialement.

Dans un système TAWS, la détection d'obstacle se fait généralement en entrant, a priori, dans la base du TAWS un certain nombre d'informations d'obstacles sous la forme de points de référence (généralement en coordonnées latitude/longitude), d'une géométrique imposée (cylindre, carré) et d'une valeur d'élévation. Ces données d'obstacles sont interprétées par le système TAWS comme une surélévation locale du terrain localement autour du point.

Malheureusement, les systèmes TAWS présentent un certain nombre d'inconvénients.

En premier lieu, la base d'élévation terrain d'un système TAWS ayant un découpage en cellules rectangulaires dont la résolution n'est pas très fine (de l'ordre de 3 secondes d'arc), la précision de la détection de l'élévation faite par le système TAWS dépend de la taille de la cellule dans laquelle se trouve le point de référence de l'obstacle. Le taux de fausses alarmes (car le système est conservatif et préfère alerter plus tôt) est donc élevé pour les obstacles.

Par ailleurs, dans un système TAWS, la détection des collisions potentielles avec ces obstacles est basée sur la validité et la précision des informations enregistrées dans la base de données d'obstacles. Cette détection est donc absolument inutile en pratique lorsque ces données sont erronées ou obsolètes, notamment dans un environnement comportant des obstacles temporaires non répertoriés.

En pratique, ce taux de fausse alarme conduit le plus souvent les équipages d'hélicoptère a « couper » l'équipement pour ne pas être ennuyé par les alarmes sonores ; cela conduit à l'effet inverse de celui désiré qui est de détecter et alerter des dangers.

Par ailleurs, le système TAWS est très mal adapté aux aéronefs évoluant à basse vitesse car, pour ceux-ci, la projection de la trajectoire est impossible. De plus, dans ce mode, l'influence du vent sur l'aéronef devient prépondérante dans l'évaluation du danger par rapport aux obstacles et le système TAWS ne répond pas à ce besoin.

Par ailleurs, le document FR2932279 décrit un système permettant de faire collaborer les systèmes TAWS et HELLAS ("helicopter laser radar system") en définissant une zone de risque obstruction définie par les dimensions de l'obstruction augmentées d'un volume dont les dimensions sont fonction de la vitesse de rapprochement de l'obstacle et d'un temps d'anticipation, ce qui nécessite connaître/calculer les dimensions de l'obstacle. Les points détectés par les capteurs du système HELLAS sont utilisés par des moyens d'identification afin de déterminer les paramètres des obstacles (position, hauteur, dimensions, ...) de manière à se ramener au cas des obstacles répertoriés par TAWS.

### Objet et résumé de l'invention

L'invention propose un procédé et un dispositif de détection d'obstacles qui ne présente pas les inconvénients précités.

Plus précisément, l'invention concerne un procédé de détection de collisions potentielles pouvant être mis en oeuvre dans un aéronef équipé d'au moins un capteur apte à fournir une distance et un angle d'un obstacle détecté ce capteur par rapport à un référentiel dudit aéronef. Ce procédé comporte :
- une étape pour obtenir un premier ensemble de points à partir de certains des obstacles détectés par chacun des capteurs ;
- une étape de création d'un ensemble de points par union des premiers ensembles de points ;
- une étape pour obtenir un mode de détection de collisions potentielles en utilisant au moins la vitesse de l'aéronef et le mode de guidage de l'aéronef ;
- une étape d'obtention d'un ensemble de points transformés obtenus en appliquant à l'ensemble de points, une transformation choisie en fonction du mode de détection ; et
- une étape de calcul d'au moins une enveloppe de protection, le mode de ce calcul étant choisi en fonction du mode de détection, les collisions potentielles détectées par ce procédé correspondant aux obstacles associés aux points transformés compris dans au moins une de ces enveloppes.

Corrélativement l'invention concerne un dispositif de détection de collisions potentielles pouvant être embarqué dans un aéronef équipé d'au moins un capteur apte à fournir une distance et un angle d'un obstacle détecté par ce capteur par rapport à un référentiel de l'aéronef. Ce dispositif comporte :
- des moyens pour obtenir un premier ensemble de points à partir de certains des obstacles détectés par chacun des capteurs ;
- des moyens de création d'un ensemble de points par union des premiers ensembles de points ;
- des moyens pour obtenir un mode de détection de collisions potentielles en utilisant au moins la vitesse de l'aéronef et un mode de guidage de l'aéronef ;
- des moyens d'obtention d'un ensemble de points transformés obtenus en appliquant à cet ensemble de points une transformation choisie en fonction du mode de détection ; et
- des moyens de calcul d'au moins une enveloppe de protection, le mode de ce calcul étant choisi en fonction dudit mode de détection, les collisions potentielles détectées par ce dispositif correspondant aux obstacles associés aux points transformés compris dans au moins une de ces enveloppes.

L'invention vise également un aéronef, par exemple un hélicoptère, incorporant un dispositif tel que mentionné ci-dessus.

Le capteur peut notamment être constitué par un radar ou par une caméra.

Dans un mode particulier de réalisation de l'invention, on utilise, pour obtenir le mode de détection de collisions potentielles une information binaire indiquant si l"aéronef est en vol en formation ou non, en plus de la vitesse de l'aéronef et du mode de guidage de l'aéronef.

Dans un mode particulier de réalisation de l'invention, le mode de détection de collisions potentielles est sélectionné parmi un ensemble fini de modes prédéterminés.

Le procédé et le dispositif de détection selon l'invention sont plus fiables que les procédés basés sur la détection d'obstacles déclarés dans une base de données, puisqu'ils prennent en compte tout obstacle réel détectable par un capteur.

Le procédé et le dispositif selon l'invention utilisent un ensemble de points et offrent donc une granularité beaucoup plus fine que les systèmes TAWS limités par la résolution de la géométrie des cellules d'élévation terrain.

De façon très avantageuse, les enveloppes de protection calculées par le procédé et les dispositifs selon l'invention prennent en compte la vitesse de l'aéronef et le mode de guidage.

La prise en compte de la vitesse de l'aéronef permet de définir une enveloppe de protection à basse vitesse et une enveloppe de protection à haute vitesse.

Par ailleurs, la prise en compte du mode de guidage permet une détection plus fine et la diminution du nombre de fausses alarmes.

Toutes ces caractéristiques contribuent à obtenir un système dans lequel le nombre de fausses alarmes est considérablement réduit.

Dans un mode particulier de réalisation, dans lequel le capteur est en outre apte à fournir une élévation de l'obstacle détecté par rapport au référentiel de l'aéronef, l'étape d'obtention du premier ensemble de points se fait par sélection des points dont l'élévation est incluse dans le secteur vertical dépendant de l'angle géométrique de déplacement vertical de l'aéronef.

Cette caractéristique permet de sélectionner uniquement les obstacles pertinents par rapport à l'évolution verticale de l'aéronef et donc de réduire drastiquement le nombre de fausses alarmes.

Dans un mode particulier de réalisation, l'aéronef comporte en outre des moyens d'accès à une base de données d'obstacles déclarés et le procédé de détection selon l'invention comporte en outre :
- une étape pour obtenir un deuxième ensemble de points à partir d'obstacles déclarés dans la base de données et situés à proximité de l'aéronef ;
- une étape pour ajouter les points du deuxième ensemble de points, à l'ensemble union précité avant l'étape d'obtention des points transformés.

L'invention permet ainsi d'enrichir l'ensemble des obstacles détectés par des obstacles déclarés dans une base de données. Cette caractéristique permet avantageusement de rendre le procédé et le système selon l'invention compatibles avec des systèmes basés sur des bases de données. Cette option sera privilégiée lorsque les bases de données sont suffisamment précises et à jour pour éviter la génération de fausses alarmes.

Dans un mode particulier de réalisation, l'étape de calcul permet d'obtenir une enveloppe de protection interne et au moins une enveloppe de protection externe englobant cette enveloppe de protection interne.

L'enveloppe de protection interne peut par exemple être dimensionnée pour correspondre à une zone dans lesquels les collisions potentielles sont tellement proches qu'elles mettent en danger l'aéronef.

L'enveloppe de protection externe peut par exemple être obtenue à partir de l'enveloppe de protection interne par homothétie. Elle peut être utilisée pour la visualisation d'obstacles aux environs de l'aéronef ou pour évaluer la distance latérale restante avant alarme.

Dans un mode particulier de réalisation, le procédé de détection selon l'invention comporte une étape de restitution d'un signal représentatif de la position spatiale des points transformés correspondant à une collision potentielle dans au moins une enveloppe.

Dans un mode particulier de réalisation, le procédé de détection selon l'invention comporte une étape de génération d'au moins une alarme lorsqu'on détecte au moins une collision potentielle.

Préférentiellement, le procédé selon l'invention génère différentes alarmes selon que la collision potentielle correspond à un point transformé compris dans une enveloppe de protection interne ou dans une enveloppe de protection externe.

Le signal restitué peut par exemple un signal visuel, tel qu'un voyant ou un affichage permettant de représenter la position des collisions potentielles dans les différentes enveloppes.

Lorsque plusieurs enveloppes sont utilisées, un code de couleur, des hachures, ou une texture peuvent être choisies pour faciliter la différentiation des enveloppes internes et externes.

En variante, un signal sonore peut être utilisé, comme de façon connue dans les radars de reculs pour automobiles, la fréquence ou le volume de ce signal variant, au fur et à mesure que la collision potentielle se rapproche de la frontière de l'enveloppe.

Lorsque l'aéronef est équipé de systèmes sonores stéréophoniques (enceintes, casque, ...) ceux-ci peuvent être utilisés pour produire un son directionnel.

Dans un mode particulier de réalisation, le procédé selon l'invention comporte une étape d'inhibition de l'alarme pour les points compris dans l'enveloppe externe dans au moins une des situations suivantes :
- en cas d'action volontaire de l'équipage ;
- lorsque l'aéronef est à une altitude supérieure à une altitude définie par l'équipage ;
- lorsque l'aéronef se trouve en phase d'approche.

Ce mode d'inhibition permet de ne pas perturber le pilote ou l'équipage lorsque le risque réel de collision est nul ou quasiment nul.

Ce mode de réalisation permet de s'assurer qu'une alerte sera générée en cas de risque de collision avéré, y compris si le mode d'inhibition a été mis en oeuvre.

Dans un mode particulier de réalisation, la transformation utilisée pour obtenir l'ensemble de points transformés est une dilatation en distance radiale visant à rapprocher les points de cet ensemble radialement vers l'aéronef lorsque l'aéronef évolue à une vitesse supérieure à une vitesse seuil.

Le coefficient de dilatation peut par exemple être une marge de sécurité correspondant à la distance du contour de l'appareil.

Dans un mode préféré de réalisation, la transformation utilisée pour obtenir l'ensemble de points transformés prend en compte la vitesse du vent lorsque l'aéronef évolue à une vitesse inférieure à une vitesse seuil.

Dans un mode particulier de réalisation, la transformation utilisée pour obtenir l'ensemble de points transformés lorsque l'aéronef évolue à une vitesse inférieure à une vitesse seuil consiste à :
- obtenir l'ensemble de points transformés en considérant que l'aéronef évolue à une vitesse supérieure à la vitesse seuil ; et
- et appliquer à ces derniers une transformation qui compense l'effet du vent et une marge de sécurité.

Ces caractéristiques permettent d'obtenir un système de détection beaucoup plus fiable qu'un système TAWS à très basse vitesse, voire en sustentation à un point fixe, celui-ci n'étant pas en mesure de tenir compte du vent dans ses calculs.

A basse vitesse, les aéronefs sont excessivement maniables et peuvent notamment tourner sur eux-mêmes ; la vitesse du vent devient prépondérante au détriment de la trajectoire. L'invention permet de rapprocher virtuellement de l'aéronef, les obstacles situés de l'autre côté de l'aéronef par rapport à la direction du vent.

Dans un mode particulier de réalisation, le mode de calcul de l'enveloppe de protection prend au moins en compte la géométrie d'au moins une partie de l'aéronef et une première marge de sécurité lorsque l'aéronef évolue à une vitesse inférieure à une vitesse seuil.

Lorsque l'aéronef est un hélicoptère, la partie considérée peut par exemple être le rotor de la queue de cet hélicoptère.

La première marge de sécurité peut notamment être choisie en fonction de la vitesse permettant à l'aéronef de se sustenter à un point fixe.

Ce calcul permet de déterminer des volumes de protection latéraux ce dont le système TAWS est incapable. L'invention peut ainsi être utilisée pour fournir des informations permettant de déterminer si un obstacle peut être évité au moyen d'une manoeuvre latérale.

Dans un mode particulier de réalisation, le mode de calcul de l'enveloppe de protection prend au moins en compte la vitesse du vent, la vitesse de l'aéronef et une deuxième marge de sécurité lorsque l'aéronef aéronef évolue à une vitesse supérieure à une vitesse seuil.

On considère en effet, lorsque l'aéronef évolue suffisamment rapidement, qu'il est en mesure à tout moment d'effectuer une manoeuvre latérale, celle-ci dépendant de sa vitesse et de celle du vent.

De façon connue, une trajectoire circulaire de l'aéronef en l'absence de vent se déforme en cycloïde sous l'effet du vent.

Lorsqu'on utilise une enveloppe interne et une enveloppe externe, l'enveloppe interne peut par exemple être choisie comme l'ellipse englobant au plus près les cycloïdes correspondant aux manoeuvres latérales droite et gauche, la vitesse de l'aéronef et le vent étant pris en compte.

L'enveloppe externe est par exemple obtenue en appliquant une deuxième marge de sécurité pour maintenir une distance fixe entre l'aéronef et les collisions potentielles.

Dans un mode particulier de réalisation, le mode de détection de collisions potentielles est tel que :
- ce mode permet d'obtenir des points transformés adaptés à un aéronef évoluant à basse vitesse et au moins une enveloppe de protection adaptée à un aéronef évoluant à basse vitesse lorsque l'aéronef évolue à une vitesse inférieure à une vitesse seuil ;
- ce mode permet d'obtenir des points transformés adaptés à un aéronef évoluant à haute vitesse et au moins une enveloppe de protection adaptée à un aéronef évoluant à haute vitesse lorsque l'aéronef évolue à une vitesse supérieure à cette vitesse seuil, le mode de guidage étant un mode de guidage au pilote automatique selon une route au sol ou un mode de guidage au calculateur de vol selon une route au sol;
- ce mode permet d'obtenir des points transformés adaptés à un aéronef évoluant à basse vitesse et au moins une enveloppe de protection adaptée à un aéronef évoluant à haute vitesse lorsque l'aéronef évolue à une vitesse supérieure à la vitesse seuil, le mode de guidage étant un mode de guidage selon un cap ou un guidage manuel.

Dans un mode particulier de réalisation, les différentes étapes du procédé de détection de collisions potentielles sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de détection de collisions potentielles tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente de façon schématique, un aéronef conforme à un mode particulier de réalisation de l'invention ;
- la figure 2 représente, sous forme d'organigramme, les principales étapes d'un procédé de détection de collisions potentielles conforme à un mode particulier de réalisation de l'invention ;
- la figure 3 représente des points correspondant à des obstacles détectés par des capteurs de l'aéronef de la figure 1 ;
- la figure 4 représente l'ensemble des points pris en compte dans un mode particulier de réalisation de l'invention
- la figure 5 représente une dilatation en distance des points de la figure 4 ;
- les figures 6A à 6D représentent l'obtention d'un ensemble de points utilisés dans un mode de détection basse vitesse sous différentes conditions ;
- les figures 7A et 7B illustrent respectivement des volumes de protection pour les basse et haute vitesses ;
- les figures 8A à 8D représentent les points de la figure 6B avec les enveloppes des figures 7A et 7B ;
- la figure 9 représente sous forme d'organigramme une routine de gestion des alertes pouvant être utilisée dans un mode particulier de réalisation de l'invention.

### Description détaillée d'un mode de réalisation de l'invention

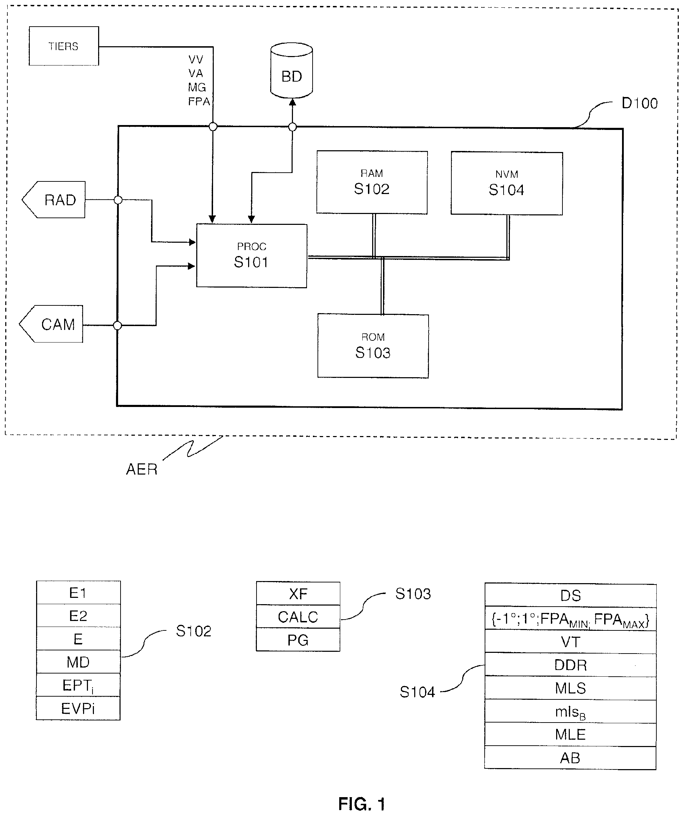

La **figure 1** représente un aéronef AER conforme à un mode particulier de réalisation de l'invention.

Cet aéronef AER comporte un dispositif D100 de détection de collisions potentielles conforme à l'invention.

Dans l'exemple de réalisation décrit ici, l'aéronef AER comporte deux capteurs, à savoir un radar RAD et une caméra CAM. Conformément à l'invention, chacun de ces capteurs est apte à fournir une distance et un angle des obstacles qu'il détecte par rapport au à un référentiel de l'aéronef AER.

A titre d'exemple, le radar RAD peut être un radar laser, un radar à ondes courtes, ou un radar à impulsions. La caméra CAM peut être une caméra stéréoscopique dans le spectre visible ou dans le spectre infrarouge. On peut aussi utiliser une caméra à visée laser.

Dans l'exemple de réalisation décrit ici, le dispositif D100 a l'architecture matérielle d'un ordinateur. Il comporte notamment un processeur S101, une mémoire vive de type RAM S102, une mémoire morte de typo ROM S103 et une mémoire non volatile réinscriptible S104 interconnectés par un bus.

Ce dispositif D100 comporte en outre une entrée associée à chacun des capteurs et des moyens pour obtenir d'un ou plusieurs dispositif tiers le vecteur vent W, la vitesse de l'aéronef VA, l'angle géométrique FPA de déplacement vertical de l'aéronef et le mode de guidage MG de l'aéronef.

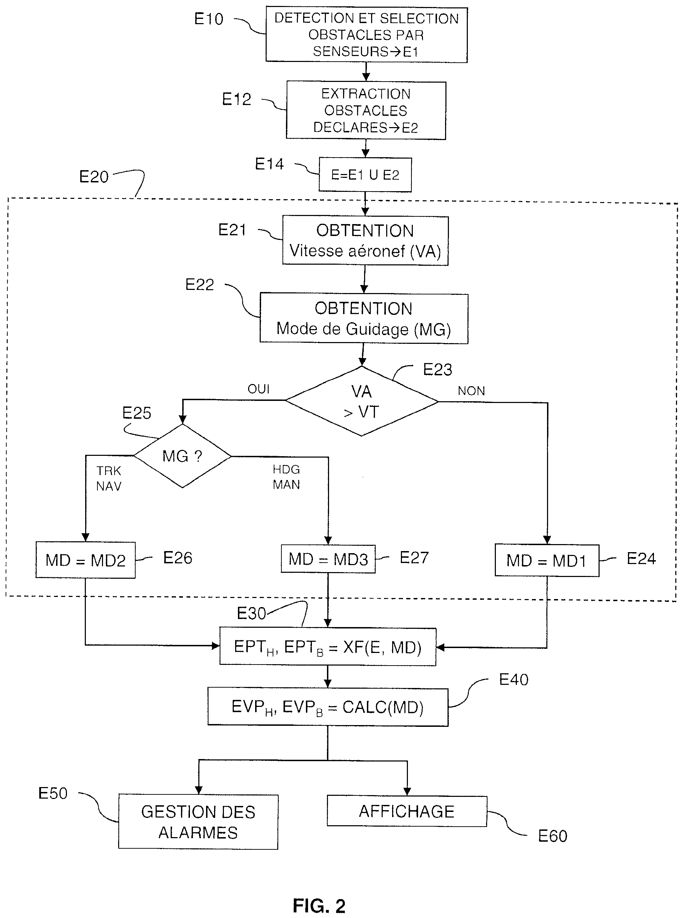

La mémoire morte S103 constitue un support d'enregistrement conforme à l'invention. Ce support d'enregistrement est lisible par le processeur S101 ; il comporte des instructions d'un programme d'ordinateur PG conforme à l'invention apte à mettre en oeuvre un procédé de détection de collisions potentielles conforme à l'invention et dont les principales étapes seront décrites ultérieurement en référence à la figure 2.

La mémoire morte S103 comporte en outre une fonction XF de transformation de points et une fonction CALC de calcul d'enveloppes de protection.

La mémoire vive S102 comporte un certain nombre de registres pour mémoriser les variables nécessaires à la mise en oeuvre de ce procédé.

La **figure 2** représente sous forme d'organigramme les principales étapes E10 à E60 du procédé de détection de collisions potentielles mis en oeuvre par le dispositif D100 de la figure 1.

Dans l'exemple de réalisation décrit ici, ce procédé comporte une étape E10 pour obtenir et éventuellement sélectionner un ensemble de points E1 à partir d'obstacles détectés par le radar RAD et la caméra CAM.

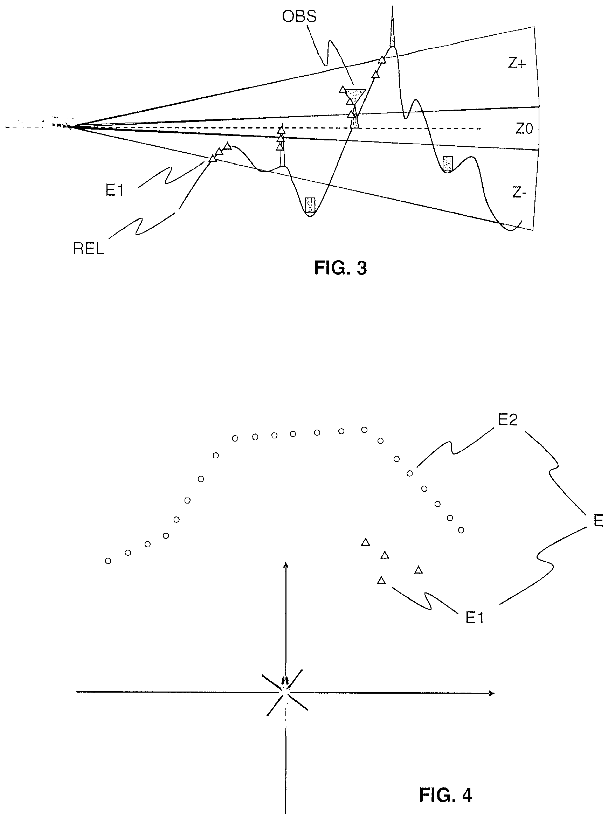

Dans cet exemple, l'ensemble E1 comporte tous les points détectés par la caméra CAM et une sélection de points correspondant à des obstacles détectés par le radar RAD comme cela va maintenant être décrit en référence à la figure 3 qui va maintenant être décrite.

La **figure 3** représente en coupe une vue verticale d'un relief REL comportant des obstacles OBS détectés par le radar RAD. Dans l'exemple décrit ici, on représente un volume correspondant à l'espace dans lequel l'aéronef AER peut se déplacer, en fonction de ces capacités de montée et de descente.

Ce volume comporte trois sous-volumes référencés Z+, Z0 et Z-correspondant respectivement à :
- [1°, FPA_{MAx}] : volume atteignable en montée pour Z+;
- [-1°, FPA_{MIN}] : volume atteignable en descente pour Z- ;
- [-1°, +1°] : volume atteignable en croisière pour Z0.

Les valeurs {-1°, +1°, FPA_{MIN} et FPA_{MAX}} sont mémorisées dans la mémoire non volatile réinscriptible S104.

Dans cet exemple, le dispositif D100 obtient, du dispositif tiers, la valeur courante FPA de l'angle géométrique de déplacement vertical de l'aéronef et n'ajoute à l'ensemble E1 que les obstacles compris dans le volume Z+, Z- ou Z0 correspondant à cette valeur.

Dans cet exemple, l'aéronef AER comporte en outre des moyens d'accès à une base de données BD d'obstacles déclarés. Dans l'exemple de réalisation décrit ici, cette base de données est stockée dans l'aéronef AER, en dehors du dispositif D100. En variante, elle pourrait y être intégrée.

La base de données BD, pourrait, de façon optionnelle, être organisée comme une base de données d'élévation terrain de type TAWS.

En tout état de cause, cette base de données BD comporte des positions et élévations d'obstacles dits déclarés.

Dans l'exemple de réalisation décrit ici, l'étape E10 est suivie par une étape E12 au cours de laquelle le dispositif D100 obtient un deuxième ensemble de points E2 à partir d'obstacles déclarés dans la base de données BD et situés à proximité dudit aéronef. Dans cet exemple, on considère qu'un obstacle déclaré est à proximité de l'aéronef AER lorsqu'il se trouve à une distance inférieure à une distance seuil DS mémorisée dans la mémoire S104.

L'étape E12 est suivie par une étape E14 au cours de laquelle le dispositif D100 effectue l'union des ensembles E1 obtenus de chacun des capteurs (obstacles détectés) et éventuellement de l'ensemble E2 (obstacles déclarés).

Le résultat de cette étape E14 est illustré à la **figure 4****.** Bien entendu dans le cas où il n'y aurait qu'un seul capteur et pas de base de données d'objets déclarés, cette étape E14 serait superflue.

Nous allons maintenant décrire une étape générale E20 d'obtention d'un mode de détection de collisions potentielles pouvant être utilisée dans l'invention. Dans l'exemple de réalisation décrit ici, cette étape générale E20 comporte des sous-étapes E21 à E27.

Au cours de deux premières sous-étapes E21 et E22, le dispositif D100 obtient, d'un dispositif tiers, la vitesse VA de l'aéronef et le mode de guidage MG.

Dans cet exemple, les différents modes de guidage MG possibles, connus de l'homme du métier, sont :
- un mode de guidage au pilote automatique selon une route au sol (mode TRK) ;
- un mode de guidage au calculateur de vol selon une route au sol (mode NAV) ;
- un mode de guidage selon un cap (mode HDG) ; ou
- un mode de guidage manuel (mode MAN).

L'étape E20 comporte un test E23 au cours duquel le dispositif D100 compare la vitesse aéronef VA avec une vitesse seuil VT mémorisée dans la mémoire S104.

Lorsque la vitesse vair VA est inférieure à la vitesse seuil VT, le test E23 est suivi par une étape E24 au cours de laquelle on initialise une variable MD, de la mémoire vive S102, à une valeur MD1. Cette valeur MD représente le mode de détection. Elle est, dans ce cas, représentative d'un mode basse vitesse.

Lorsque la vitesse aéronef VA est supérieure à la vitesse seuil VT, le test E23 est suivi par un test E25 au cours duquel le dispositif D100 compare le mode de guidage MG, obtenu à la sous-étape E22, avec les différents modes possibles.

Si le mode de guidage MG est TRK ou NAV, le test E25 est suivi par une étape E26 au cours de laquelle le dispositif D100 initialise la variable MD à une valeur MD2. Cette valeur MD (mode de détection) est représentative d'un mode haute vitesse selon une route au sol.

Si le mode de guidage MG est HDG ou MAN, le test E25 est suivi par une étape E27 au cours de laquelle on initialise la variable MD à une valeur MD3. Cette valeur MD (mode de détection) est représentative d'un mode haute vitesse selon un cap.

Les étapes E24, E26 ou E27 terminent l'étape générale E20 d'obtention du mode de détection.

L'étape générale E20 est suivie par une étape E30 au cours de laquelle le dispositif D100 transforme les points de l'ensemble E, obtenu à l'étape E14, en utilisant la transformation XF mémorisée dans la mémoire ROM S103, les paramètres de cette transformation étant choisis en fonction du mode de détection. En variante, différentes transformations peuvent être mises en oeuvre.

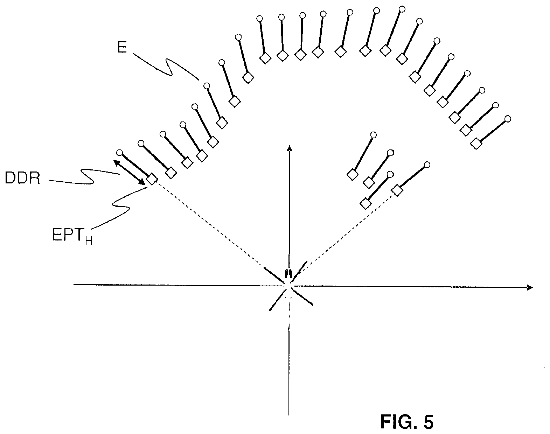

Dans l'exemple de réalisation décrit ci, lorsque le mode de détection MD est un mode haute vitesse MD2 ou MD3, le dispositif D100 effectue une transformation XF illustrée à la **figure 5****.** Elle consiste, pour chacun des points de l'ensemble E, à obtenir un point transformé en dilatant radialement ce point, par rapport à l'aéronef AER, de façon à rapprocher ce point de l'aéronef. Le rapport de dilatation DDR est mémorisé dans la mémoire S104.

L'ensemble des points transformés obtenu pour les modes MD2, MD3 est noté EPT_{H}. Il est mémorisé dans la mémoire vive S102 (référence EPTᵢ).

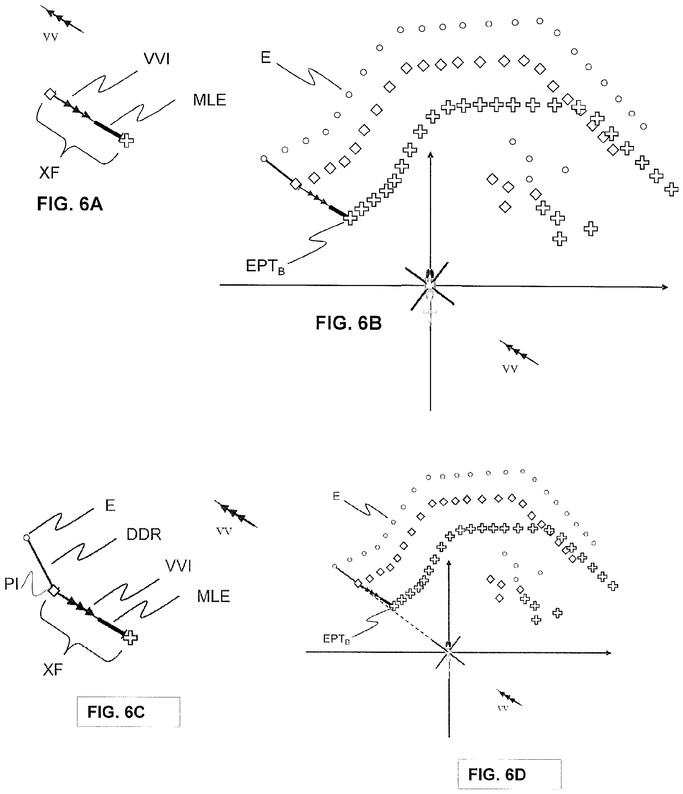

Dans l'exemple de réalisation décrit ci, lorsque le mode de détection MD est un mode basse vitesse MD1, le dispositif D100 effectue une transformation XF illustrée aux **figures 6A et 6B****.** Elle consiste, pour chacun des points de l'ensemble E, à :
- obtenir un point intermédiaire en dilatant radialement ce point, par rapport à l'aéronef AER, de façon à rapprocher ce point de l'aéronef. Le rapport de dilatation DDR est mémorisé dans la mémoire S104. ;
- obtenir un point transformé à partir de ce point intermédiaire, en appliquant une translation du vecteur de vent inverse WI et une marge latérale d'évitement MLE en prolongement de ce vecteur, cette marge étant mémorisée dans la mémoire S104.

L'ensemble des points transformés obtenu pour le mode MD1 est noté EPT_{B}. Il est mémorisé dans la mémoire vive S102 (référence EPTᵢ).

Les figures 6C et 6D illustrent l'obtention de l'ensemble de points transformés en mode détection basse vitesse dans le cas où le vecteur vent VV est presque aligné avec la direction de dilatation DDR, le point PI représentant un point intermédiaire au sens de l'invention.

L'étape E30 est suivie par une étape E40 de calcul d'au moins une enveloppe de protection choisie en fonction du mode MD.

Dans l'exemple de réalisation décrit ici, le dispositif D100 utilise la fonction CALC de la mémoire S103 pour calculer deux enveloppes de protection à savoir une enveloppe interne et une enveloppe externe. Les paramètres de cette fonction CALC sont choisis en fonction du mode de détection MD.

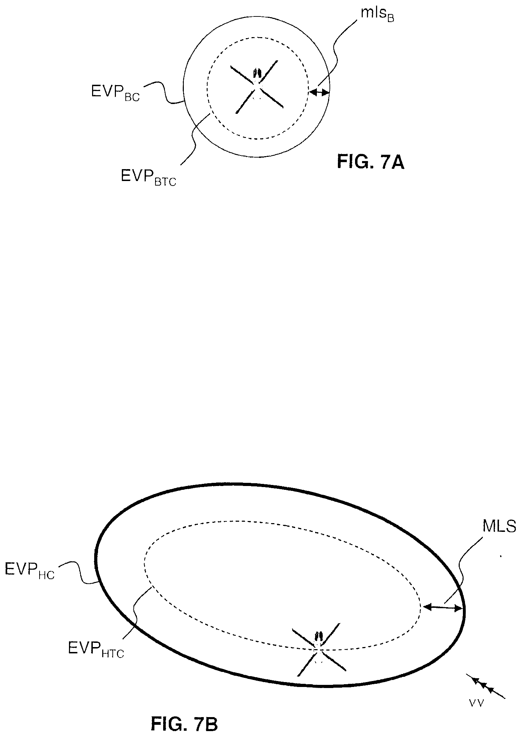

En mode basse vitesse MD1, ces enveloppes sont référencées EVP_{BC} (enveloppe externe) et EVP_{BTC} (enveloppe interne). Elles sont représentées à la **figure 7A****.** L'enveloppe interne prend en compte la géométrie d'au moins une partie de l'aéronef avec une marge mlsB mémorisée dans la mémoire S104, à savoir, dans cet exemple, la géométrie de tout l'aéronef. Dans cet exemple, l'enveloppe externe englobe l'enveloppe interne avec une marge de sécurité MLS mémorisée dans la mémoire S104.

En modes haute vitesse MD2, MD3, ces enveloppes sont référencées EVP_{HC} (enveloppe externe) et EVP_{HTC} (enveloppe interne). Elles sont représentées à la **figure 7B****.**

Dans cet exemple, l'enveloppe interne EVP_{HTC} est calculée de la façon suivante, par la fonction de calcul CALC :
- on détermine quelles seraient les trajectoires latérales gauche/droite de l'aéronef, le rayon de virage de ces trajectoires étant obtenu, en utilisant une abaque AB mémorisée dans la mémoire S104, à partir de la vitesse aéronef VA, en l'absence de vent ;
- on corrige chacune de ces trajectoires en prenant en compte le vecteur vent VV ; on obtient ainsi deux arcs de cycloïdes
- on détermine l'enveloppe interne EVP_{HTC} comme étant l'ellipse englobant ces deux arcs au plus près.

Dans cet exemple, l'enveloppe externe EVP_{HC} englobe l'enveloppe interne EVP_{HTC} avec la marge de sécurité MLS.

Les enveloppes EVPᵢ sont mémorisées dans la mémoire vive S102.

Conformément à l'invention, les collisions potentielles détectées par l'invention correspondent aux obstacles associés aux points transformés calculés à l'étape E30 et compris dans au moins une enveloppe calculée à l'étape E40.

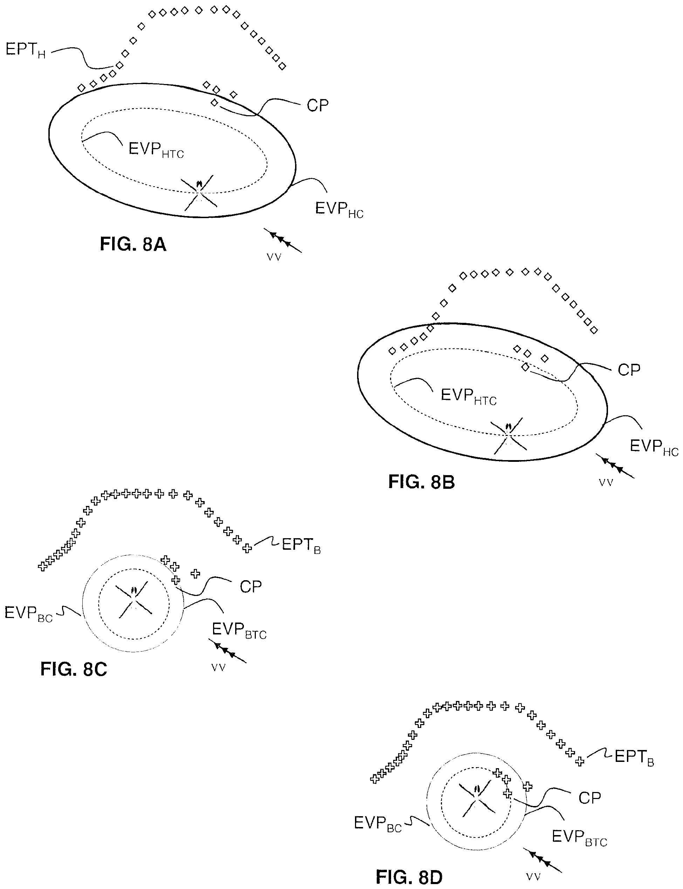

Ces collisions potentielles CP sont représentées aux **figures 8A à 8D****,** chacune de ces figures combinant l'ensemble E de points de la figure 4 avec les enveloppes :
- enveloppe externe haute vitesse EVP_{HC} (figure 8A) ;
- enveloppe interne haute vitesse EVP_{HTC} (figure 8B) ;
- enveloppe externe basse vitesse EVP_{BC} (figure 8C) ;
- enveloppe interne basse vitesse EVP_{BTC} (figure 8D) ;

Dans le mode de réalisation décrit ici, le dispositif D100 est en outre adapté à mettre en oeuvre au moins une routine de gestion des alarmes (étape E50) et/ou une routine d'affichage (étape E60) qui vont maintenant être décrites.

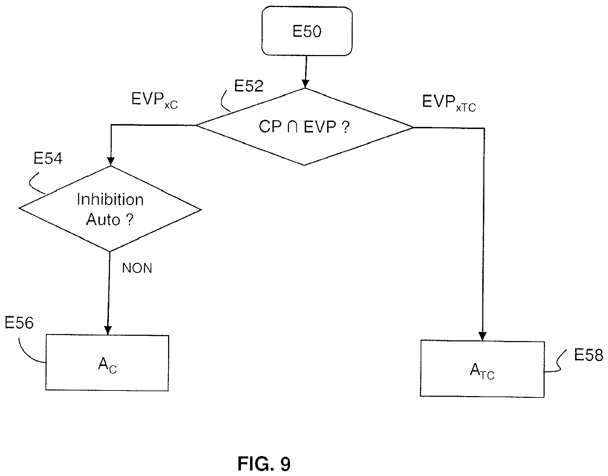

La routine gestion des alarmes mise en oeuvre dans cet exemple est illustrée **figure 9** sous forme d'organigramme. Elle comporte quatre sous-étapes E52 à E58.

Dans l'exemple de réalisation décrit ici, les enveloppes internes correspondent à des zones de danger immédiat, nécessitant une opération d'évitement. Les enveloppes externes correspondent à une zone de proximité de dangers.

La sous-étape E52 permet de déterminer si une collision potentielle CP est comprise dans une enveloppe interne ou dans une enveloppe externe.

En cas de danger immédiat, le test E52 est suivi par une étape E58 de génération d'une alarme A_{TC} visuelle et/ou sonore.

Dans le cas où la collision potentielle se situe dans l'enveloppe externe, on génère (étape E56) une alarme A_{C} différente, sauf si cette dernière a été inhibée (test E54).

Dans cet exemple, l'alarme AC peut être inhibée dans les cas suivants uniquement :
- en cas d'action volontaire de l'équipage ;
- lorsque ledit aéronef est à une altitude supérieure à une altitude définie par l'équipage ;
- lorsque l'aéronef se trouve en phase d'approche.

Dans l'exemple de réalisation décrit ici, le procédé selon l'invention comporte une étape E60 d'affichage, sous forme d'image, d'un signal visuel représentant la position spatiale des collisions potentielles CP dans une ou plusieurs enveloppes EVP_{HC}, EVP_{BC}, EVP_{HTC}, EVP_{BTC}. En variante on peut représenter la position spatiale des points correspondant aux obstacles détectés et/ou déclarés.

En variante, un autre type de signal représentatif de la position des collisions potentielles peut être restitué, par exemple sonore.

De retour à la figure 1, le processeur S101, la mémoire vive S102, la mémoire morte S103 et la mémoire non volatile réinscriptible S104 du dispositif D100 constituent ainsi des moyens aptes, notamment, à :
- obtenir un premier ensemble de points E1 à partir de certains des obstacles détectés par chacun des capteurs ;
- obtenir un deuxième ensemble de points E2 à partir d'obstacles déclarés dans la base de données BD ;
- créer un ensemble de points E par union des premier et deuxième ensembles de points ;
- obtenir un mode de détection de collisions potentielles MD en utilisant au moins la vitesse aéronef VA et un mode de guidage de l'aéronef MG ;
- obtenir un ensemble de points transformés EPT_{H}, EPT_{B} obtenus en appliquant audit ensemble de points E une transformation XF choisie en fonction dudit mode de détection MD ;
- calculer au moins une enveloppe de protection EVP_{HC}, EVP_{BC}, EVP_{HTC}, EVP_{BTC}, le mode CALC de calcul étant choisi en fonction du mode de détection MD ;
- gérer les alarmes et leurs restitutions.

## Revendications

1. Procédé de détection de collisions potentielles pouvant être mis en oeuvre dans un aéronef (AER) équipé d'au moins un capteur (RAD) apte à fournir une distance et un angle d'un obstacle détecté par ledit au moins un capteur par rapport à un référentiel dudit aéronef, ce procédé comportant :
- une étape (E10) pour obtenir un premier ensemble de points (E1) à partir de certains des obstacles détectés par chacun desdits capteurs ;
- une étape (E14) de création d'un ensemble de points (E) par union des premiers (E1) ensembles de points ;
- une étape (E20) pour obtenir un mode de détection de collisions potentielles (MD) en utilisant au moins la vitesse aéronef (VA) et le mode de guidage de l'aéronef (MG) ;
- une étape (E30) d'obtention d'un ensemble de points transformés (EPT_{H}, EPT_{B}) obtenus en appliquant audit ensemble de points (E) une transformation (XF) choisie en fonction dudit mode de détection (MD), ladite transformation (XF) utilisée pour obtenir (E30) ledit ensemble de points transformés (EPT_{H}) étant une dilatation en distance radiale visant à rapprocher les points dudit ensemble (E) radialement vers ledit aéronef lorsque ledit aéronef évolue à une vitesse aéronef (VA) supérieure à une vitesse seuil (VT) ;
- une étape (E40) de calcul d'au moins une enveloppe de protection (EVP_{HC}, EVP_{BC}, EVP_{HTC}, EVP_{BTC}), le mode (CALC) dudit calcul étant choisi en fonction dudit mode de détection (MD) ;
- lesdites collisions potentielles correspondant aux obstacles associés aux points transformés (EPT_{H}, EPT_{B}) compris dans au moins une des dites enveloppes (EVP_{HC}, EVP_{BC}, EVP_{HTC}, EVP_{BTC}).

2. Procédé selon la revendication 1, dans lequel ledit aéronef comporte en outre des moyens d'accès à une base de données (BD) d'obstacles déclarés, **caractérisé en ce qu'**il comporte en outre :
- une étape (E12) pour obtenir un deuxième ensemble de points (E2) à partir d'obstacles déclarés dans la base de données (BD) et situés à proximité dudit aéronef ;
- une étape (E14) pour ajouter les points dudit deuxième (E2) ensemble de points, audit ensemble union (E) avant ladite étape (E30) d'obtention des points transformés.

3. Procédé selon l'une quelconque des revendications 1 à 2, **caractérisé en ce que** ladite transformation (XF) utilisée pour obtenir (E30) ledit ensemble de points transformés (EPT_{B}) prend en compte la vitesse (VV) du vent lorsque ledit aéronef évolue à une vitesse aéronef (VA) inférieure à une vitesse seuil (VT).

4. Procédé selon la revendication 3, **caractérisé en ce que** ladite transformation (XF) utilisée pour obtenir (E30) ledit ensemble de points transformés (EPT_{B}) lorsque ledit aéronef évolue à une vitesse aéronef (VA) inférieure à une vitesse seuil (VT) consiste à :
- obtenir (E30) ledit ensemble de points transformés (EPT_{H}) en considérant que ledit aéronef évolue à une vitesse aéronef (VA) supérieure à ladite vitesse seuil (VT) ; et
- et appliquer à ces derniers (EPT_{H}) une transformation qui compense l'effet du vent et une marge de sécurité.

5. Procédé selon l'une quelconque des revendications 1 à 4, **caractérisé en ce que** ledit mode de calcul (E40) de ladite enveloppe de protection (EVP_{BC}, EVP_{BTC}) prend au moins en compte la géométrie d'au moins une partie de l'aéronef et une première marge de sécurité (mls_{B}) lorsque ledit aéronef évolue à une vitesse aéronef (VA) inférieure à une vitesse seuil (VT).

6. Procédé selon l'une quelconque des revendications 1 à 5, **caractérisé en ce que** ledit mode de calcul (E40) de ladite enveloppe de protection (EVP_{HC}, EVP_{HTC}) prend au moins en compte la vitesse (VV) du vent, la vitesse de l'aéronef et une deuxième marge de sécurité (MLS) lorsque ledit aéronef évolue à une vitesse aéronef (VA) supérieure à une vitesse seuil (VT).

7. Procédé selon l'une quelconque des revendications 1 à 6, dans lequel ledit au moins un capteur (RAD) est en outre apte à fournir une élévation de l'obstacle détecté (OBS) par rapport audit référentiel, **caractérisé en ce que** l'étape (E10) d'obtention dudit au moins un premier ensemble de points (E1) se fait par sélection des points dont l'élévation est incluse dans le secteur vertical dépendant de l'angle géométrique de déplacement vertical de l'aéronef.

8. Procédé selon l'une quelconque des revendications 1 à 7, **caractérisé en ce que** ledit mode de détection de collisions potentielles (MD) est tel que :
- ce mode (MD1) permet d'obtenir des points transformés (EPT_{B}) adaptés à un aéronef évoluant à basse vitesse et au moins une enveloppe de protection (EVP_{BC}, EVP_{BTC}) adaptée à un aéronef évoluant à basse vitesse lorsque l'aéronef évolue à une vitesse inférieure à une vitesse seuil (VT) ;
- ce mode (MD2) permet d'obtenir des points transformés (EPT_{H}) adaptés à un aéronef évoluant à haute vitesse et au moins une enveloppe de protection (EVP_{HC}, EVP_{HTC}) adaptée à un aéronef évoluant à haute vitesse lorsque l'aéronef évolue à une vitesse supérieure à cette vitesse seuil, le mode de guidage (MG) étant un mode (TRK) de guidage au pilote automatique selon une route au sol ou un mode (NAV) de guidage au calculateur de vol selon une route au sol;
- ce mode (MD3) permet d'obtenir des points transformés (EPT_{B}) adaptés à un aéronef évoluant à basse vitesse et au moins une enveloppe de protection (EVP_{HC}, EVP_{HTC}) adaptée à un aéronef évoluant à haute vitesse lorsque l'aéronef évolue à une vitesse supérieure à la vitesse seuil (VT), le mode de guidage étant un mode (HDG) de guidage au pilote automatique selon un cap ou un mode (MAN) de guidage manuel.

9. Procédé selon l'une quelconque des revendications 1 à 8, **caractérisé en ce qu'**il comporte une étape (E60) de restitution d'un signal représentatif de la position spatiale des points transformés (EPT) correspondant à une collision potentielle dans au moins une desdites enveloppes (EVP_{HC}, EVP_{BC}, EVP_{HTC}, EVP_{BTC}).

10. Procédé selon l'une quelconque des revendications 1 à 9, **caractérisé en ce que** ladite étape (E40) de calcul permet d'obtenir une enveloppe de protection interne (EVP_{HTC}, EVP_{BTC}) et au moins une enveloppe de protection externe (EVP_{HC}, EVP_{BC}) englobant ladite enveloppe de protection interne.

11. Procédé selon l'une quelconque des revendications 1 à 10, **caractérisé en ce qu'**il comporte une étape (E50) de génération d'au moins une alarme (A_{C}, A_{TC}) lorsqu'on détecte au moins une collision potentielle.

12. Procédé selon les revendications 10 et 11, **caractérisé en ce qu'**on génère (E50) différentes alarmes (A_{C}, A_{TC}) selon que ladite collision potentielle correspond à un point transformé compris dans ladite enveloppe de protection interne (EVP_{HTC}, EVP_{BTC}) ou dans ladite au moins une enveloppe de protection externe (EVP_{HC}, EVP_{BC}).

13. Procédé selon l'une quelconque des revendications 11 à 12, **caractérisé en ce qu'**il comporte une étape d'inhibition de l'alarme pour les points compris dans ladite enveloppe externe (EVP_{HC}, EVP_{BC}) dans au moins une des situations suivantes :
- en cas d'action volontaire de l'équipage ;
- lorsque ledit aéronef est à une altitude supérieure à une altitude définie par l'équipage ;
- lorsque l'aéronef se trouve en phase d'approche.

14. Dispositif (D100) de détection de collisions potentielles pouvant être embarqué dans un aéronef équipé d'au moins un capteur (RAD, CAM) apte à fournir une distance et un angle d'un obstacle détecté par ledit au moins un capteur par rapport à un référentiel dudit aéronef, ce dispositif comportant :
- des moyens (S101, S102, S103, S104) pour obtenir un premier ensemble de points (E1) à partir de certains des obstacles détectés par ledit au moins un capteur ;
- des moyens (S101, S102, S103, S104) de création d'un ensemble de points (E) par union des premiers (E1) ensembles de points ;
- des moyens (S101, S102, S103, S104) pour obtenir un mode de détection de collisions potentielles (MD) en utilisant au moins la vitesse aéronef (VA) et un mode de guidage de l'aéronef (MG) ;
- des moyens (S101, S102, S103, S104) d'obtention d'un ensemble de points transformés (EPT_{H}, EPT_{B}) obtenus en appliquant audit ensemble de points (E) une transformation (XF) choisie en fonction dudit mode de détection (MD), ladite transformation (XF) utilisée pour obtenir (E30) ledit ensemble de points transformés (EPT_{H}) étant une dilatation en distance radiale visant à rapprocher les points dudit ensemble (E) radialement vers ledit aéronef lorsque ledit aéronef évolue à une vitesse aéronef (VA) supérieure à une vitesse seuil (VT) ; ;
- des moyens (S101, S102, S103, S104) de calcul d'au moins une enveloppe de protection (EVP_{HC}, EVP_{BC}, EVP_{HTC}, EVP_{BTC}), le mode (CALC) dudit calcul étant choisi en fonction dudit mode de détection (MD) ;
- lesdites collisions potentielles correspondant aux obstacles associés aux points transformés (EPT_{H}, EPT_{B}) compris dans au moins dite enveloppe (EVP_{HC}, EVP_{BC}, EVP_{HTC}, EVP_{BTC}).

15. Programme d'ordinateur (PG) comportant des instructions pour l'exécution des étapes du procédé de détection de collisions potentielles selon l'une quelconque des revendications 1 à 13 lorsque ledit programme est exécuté par un ordinateur.

16. Support d'enregistrement (S103) lisible par un ordinateur sur lequel est enregistré un programme d'ordinateur comprenant des instructions pour l'exécution des étapes du procédé de détection de collisions potentielles selon l'une quelconque des revendications 1 à 13.

17. Aéronef (AER) comportant un dispositif de détection (D100) selon la revendication 14.

## Patentansprüche

1. Verfahren zur Erfassung von möglichen Kollisionen, das in einem Luftfahrzeug (AER) durchgeführt werden kann, welches mit wenigstens einem Sensor (RAD) ausgerüstet ist, der geeignet ist, einen Abstand und einen Winkel eines durch den wenigstens einen Sensor erfassten Hindernisses gegenüber einem Bezugssystem des Luftfahrzeugs zu liefern, wobei dieses Verfahren umfasst:
- einen Schritt (E10) zum Erhalten einer ersten Menge von Punkten (E1) anhand von einigen der durch einen jeden der Sensoren erfassten Hindernisse,
- einen Schritt (E14) zum Erzeugen einer Menge von Punkten (E) durch Zusammenführen der ersten (E1) Punktemengen,
- einen Schritt (E20) zum Erhalten einer Art der Erfassung von möglichen Kollisionen (MD) unter Verwendung wenigstens der Luftfahrzeuggeschwindigkeit (VA) und der Führungsart des Luftfahrzeugs (MG),
- einen Schritt (E30) zum Erhalten einer Menge von transformierten Punkten (EPT_{H}, EPT_{B}), die durch Anwendung einer in Abhängigkeit von der Erfassungsart (MD) gewählten Transformation (XF) auf die Menge von Punkten (E) erhalten werden, wobei die Transformation (XF), die für den Erhalt (E30) der Menge von transformierten Punkten (EPT_{H}) verwendet wird, eine radiale Abstandsdilatation ist, welche darauf abzielt, die Punkte der Menge (E) in Richtung des Luftfahrzeugs radial anzunähern, wenn sich das Luftfahrzeug mit einer Luftfahrzeuggeschwindigkeit (VA) bewegt, die höher als eine Schwellengeschwindigkeit (VT) ist,
- einen Schritt (E40) zum Berechnen wenigstens einer Schutzeinhüllenden (EVP_{HC}, EVP_{BC}, EVP_{HTC}, EVP_{BTC}), wobei die Art (CALC) der Berechnung in Abhängigkeit von der Erfassungsart (MD) gewählt wird,
- wobei die möglichen Kollisionen den Hindernissen entsprechen, die den transformierten Punkten (EPT_{H}, EPT_{B}), welche in wenigstens einer der Einhüllenden (EVP_{HC}, EVP_{BC}, EVP_{HTC}, EVP_{BTC}) enthalten sind, zugeordnet sind.

2. Verfahren nach Anspruch 1, bei dem das Luftfahrzeug ferner Mittel für den Zugang zu einer Datenbank (BD) von gemeldeten Hindernissen umfasst, **dadurch gekennzeichnet, dass** es ferner umfasst:
- einen Schritt (E12) zum Erhalten einer zweiten Menge von Punkten (E2) anhand von Hindernissen, die in der Datenbank (BD) gemeldet und in der Nähe des Luftfahrzeugs gelegen sind,
- einen Schritt (E14) zum Hinzufügen der Punkte der zweiten (E2) Menge von Punkten zu der Vereinigungsmenge (E) vor dem Schritt (E30) des Erhaltens der transformierten Punkte.

3. Verfahren nach einem der Ansprüche 1 bis 2, **dadurch gekennzeichnet, dass** die Transformation (XF), die für den Erhalt (E30) der Menge von transformierten Punkten (EPT_{B}) verwendet wird, die Windgeschwindigkeit (VV) berücksichtigt, wenn sich das Luftfahrzeug mit einer Luftfahrzeuggeschwindigkeit (VA) bewegt, die niedriger als eine Schwellengeschwindigkeit (VT) ist.

4. Verfahren nach Anspruch 3, **dadurch gekennzeichnet, dass** die Transformation (XF), die für den Erhalt (E30) der Menge von transformierten Punkten (EPT_{B}) verwendet wird, wenn sich das Luftfahrzeug mit einer Luftfahrzeuggeschwindigkeit (VA) bewegt, die niedriger als eine Schwellengeschwindigkeit (VT) ist, darin besteht:
- die Menge von transformierten Punkten (EPT_{H}) unter Berücksichtigung dessen zu erhalten (E30), dass sich das Luftfahrzeug mit einer Luftfahrzeuggeschwindigkeit (VA) bewegt, die höher als die Schwellengeschwindigkeit (VT) ist, und
- auf letztere (EPT_{H}) eine Transformation anzuwenden, die die Wirkung des Windes und einen Sicherheitszuschlag kompensiert.

5. Verfahren nach einem der Ansprüche 1 bis 4, **dadurch gekennzeichnet, dass** die Art der Berechnung (E40) der Schutzeinhüllenden (EVP_{BC}, EVP_{BTC}) wenigstens die Geometrie wenigstens eines Teils des Luftfahrzeugs und einen ersten Sicherheitszuschlag (mls_{B}) berücksichtigt, wenn sich das Luftfahrzeug mit einer Luftfahrzeuggeschwindigkeit (VA) bewegt, die niedriger als eine Schwellengeschwindigkeit (VT) ist.

6. Verfahren nach einem der Ansprüche 1 bis 5, **dadurch gekennzeichnet, dass** die Art der Berechnung (E40) der Schutzeinhüllenden (EVP_{HC}, EVP_{HTC}) wenigstens die Windgeschwindigkeit (VV), die Geschwindigkeit des Luftfahrzeugs und einen zweiten Sicherheitszuschlag (MLS) berücksichtigt, wenn sich das Luftfahrzeug mit einer Luftfahrzeuggeschwindigkeit (VA) bewegt, die höher als eine Schwellengeschwindigkeit (VT) ist.

7. Verfahren nach einem der Ansprüche 1 bis 6, bei dem der wenigstens eine Sensor (RAD) ferner geeignet ist, eine Höhe des erfassten Hindernisses (OBS) gegenüber dem Bezugssystem zu liefern, **dadurch gekennzeichnet, dass** der Schritt (E10) zum Erhalten der wenigstens einen ersten Menge von Punkten (E1) durch Auswahl der Punkte erfolgt, deren Höhe in dem vertikalen Sektor, welcher von dem geometrischen Winkel vertikaler Bewegung des Luftfahrzeugs abhängt, enthalten ist.

8. Verfahren nach einem der Ansprüche 1 bis 7, **dadurch gekennzeichnet, dass** die Art der Erfassung von möglichen Kollisionen (MD) derart ist, dass:
- diese Art (MD1) ermöglicht, transformierte Punkte (EPT_{B}), die an ein sich mit niedriger Geschwindigkeit bewegendes Luftfahrzeug angepasst sind, und wenigstens eine Schutzeinhüllende (EVP_{BC}, EVP_{BTC}), die an ein sich mit niedriger Geschwindigkeit bewegendes Luftfahrzeug angepasst ist, zu erhalten, wenn sich das Luftfahrzeug mit einer Geschwindigkeit bewegt, die niedriger als eine Schwellengeschwindigkeit (VT) ist,
- diese Art (MD2) ermöglicht, transformierte Punkte (EPT_{H}), die an ein sich mit hoher Geschwindigkeit bewegendes Luftfahrzeug angepasst sind, und wenigstens eine Schutzeinhüllende (EVP_{HC}, EVP_{HTC}), die an ein sich mit hoher Geschwindigkeit bewegendes Luftfahrzeug angepasst ist, zu erhalten, wenn sich das Luftfahrzeug mit einer Geschwindigkeit bewegt, die höher als diese Schwellengeschwindigkeit ist, wobei die Führungsart (MG) eine Führungsart (TRK) mit Autopilot entsprechend einem Bodenkurs oder eine Führungsart (NAV) mit Flugwegrechner entsprechend einem Bodenkurs ist,
- diese Art (MD3) ermöglicht, transformierte Punkte (EPT_{B}), die an ein sich mit niedriger Geschwindigkeit bewegendes Luftfahrzeug angepasst sind, und wenigstens eine Schutzeinhüllende (EVP_{HC}, EVP_{HTC}), die an ein sich mit hoher Geschwindigkeit bewegendes Luftfahrzeug angepasst ist, zu erhalten, wenn sich das Luftfahrzeug mit einer Geschwindigkeit bewegt, die höher als die Schwellengeschwindigkeit (VT) ist, wobei die Führungsart eine Führungsart (HDG) mit Autopilot entsprechend einem Kurs oder eine manuelle Führungsart (MAN) ist.

9. Verfahren nach einem der Ansprüche 1 bis 8, **dadurch gekennzeichnet, dass** es einen Schritt (E60) zur Wiedergabe eines Signals umfasst, das für die räumliche Position der transformierten Punkte (EPT), welche einer möglichen Kollision in wenigstens einer der Einhüllenden (EVP_{HC}, EVP_{BC}, EVP_{HTC}, EVP_{BTC}) entsprechen, repräsentativ ist.

10. Verfahren nach einem der Ansprüche 1 bis 9, **dadurch gekennzeichnet, dass** der Berechnungsschritt (E40) ermöglicht, eine innere Schutzeinhüllende (EVP_{HTC}, EVP_{BTC}) und wenigstens eine äußere Schutzeinhüllende (EVP_{HC}, EVP_{BC}), welche die innere Schutzeinhüllende einschließt, zu erhalten.

11. Verfahren nach einem der Ansprüche 1 bis 10, **dadurch gekennzeichnet, dass** es einen Schritt (E50) zum Generieren wenigstens eines Alarms (A_{C}, A_{TC}), wenn wenigstens eine mögliche Kollision erfasst wird, umfasst.

12. Verfahren nach den Ansprüchen 10 und 11, **dadurch gekennzeichnet, dass** je nachdem, ob die mögliche Kollision einem transformierten Punkt entspricht, der in der inneren Schutzeinhüllenden (EVP_{HTC}, EVP_{BTC}) oder in der wenigstens einen äußeren Schutzeinhüllenden (EVP_{HC}, EVR_{BC}) enthalten ist, unterschiedliche Alarme (A_{C}, A_{TC}) generiert werden.

13. Verfahren nach einem der Ansprüche 11 bis 12, **dadurch gekennzeichnet, dass** es einen Schritt zum Verhindern des Alarms für die Punkte, welche in der äußeren Einhüllenden (EVP_{HC}, EVP_{BC}) enthalten sind, in wenigstens einer der folgenden Situationen umfasst:
- im Fall einer gewollten Aktion der Besatzung,
- wenn sich das Luftfahrzeug in einer Höhe befindet, die über einer durch die Besatzung definierten Höhe liegt,
- wenn sich das Luftfahrzeug in der Anflugphase befindet.

14. Vorrichtung (D100) zur Erfassung von möglichen Kollisionen, die in einem Luftfahrzeug untergebracht sein kann, welches mit wenigstens einem Sensor (RAD, CAM) ausgerüstet ist, der geeignet ist, einen Abstand und einen Winkel eines durch den wenigstens einen Sensor erfassten Hindernisses gegenüber einem Bezugssystem des Luftfahrzeugs zu liefern, wobei diese Vorrichtung umfasst:
- Mittel (S101, S102, S103, S104) zum Erhalten einer ersten Menge von Punkten (E1) anhand von einigen der durch den wenigstens einen Sensor erfassten Hindernisse,
- Mittel (S101, S102, S103, S104) zum Erzeugen einer Menge von Punkten (E) durch Zusammenführen der ersten (E1) Punktemengen,
- Mittel (S101, S102, S103, S104) zum Erhalten einer Art der Erfassung von möglichen Kollisionen (MD) unter Verwendung wenigstens der Luftfahrzeuggeschwindigkeit (VA) und einer Führungsart des Luftfahrzeugs (MG),
- Mittel (S101, S102, S103, S104) zum Erhalten einer Menge von transformierten Punkten (EPT_{H}, EPT_{B}), die durch Anwendung einer in Abhängigkeit von der Erfassungsart (MD) gewählten Transformation (XF) auf die Menge von Punkten (E) erhalten werden, wobei die Transformation (XF), die für den Erhalt (E30) der Menge von transformierten Punkten (EPT_{H}) verwendet wird, eine radiale Abstandsdilatation ist, welche darauf abzielt, die Punkte der Menge (E) in Richtung des Luftfahrzeugs radial anzunähern, wenn sich das Luftfahrzeug mit einer Luftfahrzeuggeschwindigkeit (VA) bewegt, die höher als eine Schwellengeschwindigkeit (VT) ist,
- Mittel (S101, S102, S103, S104) zum Berechnen wenigstens einer Schutzeinhüllenden (EVP_{HC}, EVP_{BC}, EVP_{HTC}, EVP_{BTC}), wobei die Art (CALC) der Berechnung in Abhängigkeit von der Erfassungsart (MD) gewählt wird,
- wobei die möglichen Kollisionen den Hindernissen entsprechen, die den transformierten Punkten (EPT_{H}, EPT_{B}), welche in wenigstens der Einhüllenden (EVP_{HC}, EVP_{BC}, EVP_{HTC}, EVP_{BTC}) enthalten sind, zugeordnet sind.

15. Computerprogramm (PG), umfassend Befehle zur Durchführung der Schritte des Verfahrens zur Erfassung von möglichen Kollisionen nach einem der Ansprüche 1 bis 13, wenn das Programm durch einen Computer ausgeführt wird.

16. Durch einen Computer lesbarer Aufzeichnungsträger (S103), auf dem ein Computerprogramm, das Befehle zur Durchführung der Schritte des Verfahrens zur Erfassung von möglichen Kollisionen nach einem der Ansprüche 1 bis 13 umfasst, gespeichert ist.

17. Luftfahrzeug (AER), das eine Erfassungsvorrichtung (D100) nach Anspruch 14 umfasst.

## Claims

1. A method for detecting potential collisions that can be implemented in an aircraft (AER) equipped with at least one sensor (RAD) able to supply a distance and angle of an object detected by said at least one sensor relative to a referential of the aircraft, the method including:
- a step (E10) for obtaining a first set of points (E1) from certain obstacles detected by each of the sensors;
- a step (E14) for creating a set of points (E) by the union of the first sets (E1) of points;
- a step (E20) for obtaining a mode (MD) for detecting potential collisions using at least the speed of the aircraft (VA) and the guiding mode (MG) of the aircraft;
- a step (E30) for obtaining a set of transformed points (EPT_{H}, EPT_{B}) obtained by applying a transformation (XF) selected as a function of the detection mode (MD) to the set of points (E), wherein the transformation (XF) used to obtain (E30) said set of transformed points (EPT_{H}) is an expansion in radial distance aiming to bring the points of that set (E) radially toward the aircraft when the aircraft moves at a speed (VA) above a threshold speed (VT); and
- a step (E40) for calculating at least one protective envelope (EVP_{HC}, EVP_{BC}, EVP_{HTC}, EVP_{BTC}), the calculation method (CALC) being chosen according to the detection mode (MD);
- said potential collisions detected by that method corresponding to the obstacles associated with the transformed points (EPT_{H}, EPT_{B}) comprised in at least one of said envelopes (EVP_{HC}, EVP_{BC}, EVP_{HTC}, EVP_{BTC}).

2. The method according to claim 1, wherein said aircraft also includes means for accessing a database (BD) of declared obstacles, **characterized in that** it also includes:
- a step (E12) for obtaining a second set of points (E2) from obstacles declared in the database (BD) and situated near the aircraft;
- a step (E14) for adding the points of the second set of points (E2) to the aforementioned union set (E) before the step (E30) for obtaining the transformed points.

3. The method according to any one of claims 1 to 2, **characterized in that** the transformation (XF) used to obtain (E30) the set of transformed points (EPT_{B}) takes into account the speed (VV) of the wind when the aircraft moves at a speed (VA) below a threshold speed (VT).

4. The method according to claim 3, **characterized in that** said transformation (XF) used to obtain (E30) the set of transformed points (EPT_{B}) when the aircraft moves at a speed (VA) below a threshold speed (VT) consists of:
- obtaining (E30) the set of transformed points (EPT_{H}) while considering that the aircraft is moving at a speed (VA) above the threshold speed (VT); and
- applying a transformation to the latter (EPT_{H}) that offsets the effect of the wind and a safety margin.

5. The method according to any one of claims 1 to 4, **characterized in that** the mode for calculating (E40) the protective envelope (EVP_{BC}, EVP_{BTC}) takes into account at least the geometry of at least part of the aircraft and a first safety margin (mls_{B}) when the aircraft moves at a speed (VA) below a threshold speed (VT).

6. The method according to any one of claims 1 to 5, **characterized in that** the mode for calculating (E40) said protective envelope (EVP_{HC}, EVP_{HTC}) takes into account at least the wind speed (VV), the speed of the aircraft, and a second safety margin (MLS) when the aircraft moves at a speed (VA) above a threshold speed (VT).

7. The method according to any one of claims 1 to 6, wherein said at least one sensor (RAD) can also provide an elevation of the detected obstacle (OBS) relative to said referential, **characterized in that** the step (E10) for obtaining the first set of points (E1) is done by selecting points whereof the elevation is included in the vertical sector depending on the geometric angle of vertical movement of the aircraft.

8. The method according to any one of claims 1 to 7, **characterized in that** the potential collision detection mode (MD) is such that:
- this mode (MD1) makes it possible to obtain transformed points (EPT_{B}) adapted to an aircraft moving at a low speed and at least one protective envelope (EVP_{BC}, EVP_{BTC}) adapted to an aircraft moving at a low speed when the aircraft moves at a speed below a threshold speed (VT);
- this mode (MD2) makes it possible to obtain transformed points (EPT_{H}) adapted to an aircraft moving at a high speed and at least one protective envelope (EVP_{HC}, EVP_{HTC}) adapted to an aircraft moving at a high speed when the aircraft moves at a speed above that threshold speed, the guiding mode (MG) being an automatic pilot guiding mode (TRK) along a route on the ground or a flight computer guide mode (NAV) along a route on the ground;
- this mode (MD3) makes it possible to obtain transformed points (EPT_{B}) adapted to an aircraft moving at a low speed and at least one protective envelope (EVP_{HC}, EVP_{HTC}) adapted to an aircraft moving at a high speed when the aircraft moves at a speed above the threshold speed (VT), the guide mode being a guide mode (HDG) according to a heading or a manual guiding mode (MAN).

9. The method according to any one of claims 1 to 8, **characterized in that** it includes a step (E60) for returning a signal representative of the spatial position of the transformed points (EPT) corresponding to a potential collision in at least one of said envelopes (EVP_{HC}, EVP_{BC}, EVP_{HTC}, EVP_{BTC}).

10. The method according to any one of claims 1, to 9, **characterized in that** said calculation step (E40) makes it possible to obtain an inner protective envelope (EVP_{HTC}, EVP_{BTC}) and at least one outer protective envelope (EVP_{HC}, EVP_{BC}) encompassing said inner protective envelope.

11. The method according to any one of claims 1 to 10, **characterized in that** it includes a step (E50) for generating at least one alarm (A_{C}, A_{TC}) when at least one potential collision is detected.

12. The method according to claims 10 and 11, **characterized in that** different alarms (A_{C}, A_{TC}) are generated (E50) depending on whether the potential collision corresponds to a transformed point comprised in an inner protective envelope (EVP_{HTC}, EVP_{BTC}) or an outer protective envelope (EVP_{HC}, EVP_{BC}).

13. The method according to any one of claims 11 to 12, **characterized in that** it includes a step for inhibiting the alarm for the points comprised in said outer envelope (EVP_{HC}, EVP_{BC}) in at least one of the following situations:
- in case of voluntary action by the flight crew;
- when the aircraft is at an altitude higher than an altitude defined by the flight crew;
- when the aircraft is in the approach phase.

14. A device (D100) for detecting potential collisions that can be onboard an aircraft equipped with at least one sensor (PAD, CAM) able to provide a distance and angle of an obstacle detected by said sensor relative to a referential of the aircraft, the device including:
- means (S101, S102, S103, S104) for obtaining a first set of points (E1) from some of the obstacles detected by each of the sensors;
- means (S101, S102, S103, S104) for creating a set of points (E) through the union of the first sets (E1) of points;
- means (S101, S102, S103, S104) for obtaining a potential collision detection mode (MD) using at least the speed (VA) of the aircraft and a guiding mode (MG) of the aircraft;
- means (S101, S102, S103, S104) for obtaining a set of transformed points (EPT_{H}, EPT_{B}) obtained by applying a transformation (XF) selected according to the detection mode (MD) to that set of points (E), wherein the transformation (XF) used to obtain (E30) said set of transformed points (EPT_{H}) is an expansion in radial distance aiming to bring the points of that set (E) radially toward the aircraft when the aircraft moves at a speed (VA) above a threshold speed (VT); and
- means (S101, S102, S103, S104) for calculating at least one protective envelope (EVP_{HC}, EVP_{BC}, EVP_{HTC}, EVP_{BTC}), the calculation mode (CALC) being chosen according to said detection mode (MD),
- said potential collisions detected by that device corresponding to the obstacles associated with the transformed points (EPT_{H}, EPT_{B}) comprised in at least one of said envelopes (EVP_{HC}, EVP_{BC}, EVP_{HTC}, EVP_{BTC}).

15. A computer program (PG) including instructions for carrying out the steps of the potential collision detection method according to any one of claims 1 to 14 when said program is executed by a computer (OC).

16. A recording medium (S103) readable by a computer on which a computer program is recorded comprising instructions for carrying out the steps of the potential collision detection method according to any one of claims 1 to 14.

17. An aircraft (AER) including a detection device (D100) according to claim 14.
